# EUROPEAN PATENT SPECIFICATION

(11) **EP 2 877 563 B1**
(45) Date of publication and mention of the grant of the patent: **07.03.2018**
(21) Application number: 12885638.2
(22) Date of filing: 29.09.2012
(51) Int. Cl.: C11D 1/722, A01N 25/30, A01N 43/653, A01N 47/26, A01N 37/34, A01N 43/54, A01N 37/38, A01N 47/32, A01N 47/02, A01N 51/00, A01N 47/18, A01N 43/90, A01N 43/70

(54) **ALKOXYLATE COMPOSITIONS AND THEIR USE AS AGRICULTURAL ADJUVANTS**
ALKOXYLATZUSAMMENSETZUNGEN UND IHRE VERWENDUNG ALS IN DER LANDWIRTSCHAFT ANWENDBARE HILFSMITTEL
COMPOSITIONS D'ALCOXYLATES ET LEUR UTILISATION COMME ADJUVANTS AGRICOLES

(43) Date of publication of application: 03.06.2015
(73) Proprietor: Dow Global Technologies LLC, Midland, MI 48674 (US)
(72) Inventor: ZHONG, Ling, Shanghai 201206 (CN); MU, Jeff J., Shanghai 201102 (CN)
(74) Representative: Houghton, Mark Phillip
(86) International application number: PCT/CN2012/082470
(87) International publication number: WO 2014/047934

(56) References cited:
- EP-A1- 0 885 950
- WO-A1-00/50551
- WO-A1-00/50551
- WO-A1-2005/105285
- WO-A1-2008/088647
- WO-A1-2009/155187
- WO-A2-2007/064673
- WO-A2-2009/120621
- CN-A- 1 215 426
- CN-A- 1 950 141
- CN-A- 102 066 540
- DE-A1- 4 237 178
- JP-A- 2004 091 686
- US-A- 3 983 078
- Mostafa A Amer ET AL: "In-vivo Evaluation of Adjuvants for More Effective Control of Celery Leaf-Spot (Septoria apiicola) and Powdery Mildew (Euysiphe graminis) of Wheat with Fungicides", Pestic. Sci, 1 January 1993 (1993-01-01), pages 113-120, XP055340278, Retrieved from the Internet: URL:http://onlinelibrary.wiley.com/store/1 0.1002/ps.2780370202/asset/2780370202_ftp. pdf?v=1&t=iyk4v6mm&s=07b4cdee85eaff50bf03e c091d32b052eb336a4b [retrieved on 2017-01-30]
- Metalworking Chemicals: "Performance Products", , 31 December 2010 (2010-12-31), XP55123809, Retrieved from the Internet: URL:http://www.huntsman.com/performance_pr oducts/Media Library/a_MC348531CFA3EA9A2E040EBCD2B6B7B0 6/Products_MC348531D0B9FA9A2E040EBCD2B6B7B 06/Amines_MC348531D0BECA9A2E040EBCD2B6B7B0 6/Morpholine DGA_R_MC348531D0D20A9A2E040EBCD2B6B7B06/DI GLYCOLAMINE_R agen_MC348531D0DBAA9A2E040EBCD2B6B7B06/fil es/metalwo [retrieved on 2014-06-17]

## Description

### Field

This invention relates generally to surfactant blends and their use as adjuvants in agricultural compositions for dispersing, wetting and spreading agricultural active ingredients such as pesticides. More particularly, the invention relates to blends of alkoxylate compounds for use in such applications.

### Background

Agrochemical formulations are generally designed based on customer needs and the physiochemical properties of the active ingredient(s), for example, the solubility of the active ingredient in water and other non-aqueous solvents. There are two major categories of formulations: solid formulations and liquid formulations. Solid formulations include wettable powders (WP), granule (GR), dustable powder (DP), encapsulated granule (CG), and water dispersed granules. Liquid formulations include suspension concentrates (SC), emulsifiable concentrates (EC), oil-in-water emulsions (EW), micro-emulsions (ME), aqueous solution (AS), and soluble concentrate (SL).

Surfactants are commonly used in liquid agricultural formulations as adjuvants to improve the efficacy of active compounds, such as herbicides and fungicides, for instance by lowering surface tension and improving the spreading properties of the active ingredient(s) on the target. Surfactants may play other roles in this application, including dispersing, wetting, and emulsifying active ingredient(s).

Many surfactants are falling out of favor with formulators and the public for various reasons. For instance, alkylphenol ethoxylates (APEs) are widely recognized as good surfactants in a large variety of applications, including as adjuvants in agricultural formulations. APE surfactants, however, suffer from a poor public perception of their environmental compatibility. In addition, they are subject to increasing environmental regulation aimed at reducing their consumption. Other disfavored surfactants include aromatic solvents and high polarity solvents. Therefore, the use of APE and other types of surfactants is declining and suppliers are seeking alternative materials. Amer *et al.* demonstrate an improvement in activity of fungicides by use of alkylphenol ethoxylate (Pesticide Sci. 1993, 37, 113-120). WO 2009/120621 A2 discloses compositions that comprise at least one phosphated arylphenol alkoxylate surfactant and at least one alkylamine alkoxylate surfactant.

The problem addressed by this invention is the provision of new surfactants that are commercially viable replacements for APE and other disfavored materials for use as adjuvants in agricultural compositions.

### Statement of Invention

We have now found that surfactants blends as described herein exhibit various desirable properties, such as improved wetting and dispersing performance, that are at least comparable to APE and other types of surfactants. Moreover, in some embodiments, the components of the blend act synergistically; that is, the performance of the blend is surprisingly better than would be expected from the performance of the individual components. Advantageously, therefore, the surfactant blends of the invention are viable alternatives to APE and other types of surfactants.

In one aspect, there is provided a surfactant blend comprising:
(a) an alkoxylate of formula I:

   R¹O-(AO)ₓ-(EO)_{y}-H (I)

   wherein AO is propyleneoxy or butyleneoxy; EO is ethyleneoxy; R¹ is linear or branched C₆-C₁₀ alkyl; x is a real number from 4 to 6; and y is a real number from 1 to 11; and
(b) an alkoxylate of formula II:

   R²O-(EO)ᵣ-(PO)ₚ-(EO)_{q}-H (II)

   wherein EO is ethyleneoxy; PO is propyleneoxy; R² is H, or linear or branched C₂-C₄ alkyl; r is a real number from 1 to 30; p is a real number from 10 to 40; and q is a real number from 10 to 50.

In another aspect, there is provided an agricultural composition comprising a surfactant blend as described herein as an adjuvant; an agricultural active ingredient; and water.

In a further aspect, there is provided a method of controlling insects, plant diseases or weeds, the method comprising: providing a formulation including an agricultural composition as described herein, and applying an agriculturally effective amount of the formulation to at least one of the following: a plant, plant foliage, blossoms, stems, fruits, the area adjacent to the plant, soil, seeds, germinating seeds, roots, liquid and solid growth media, and hydroponic growth solutions.

### Detailed Description

Unless otherwise indicated, numeric ranges, for instance as in "from 2 to 10," are inclusive of the numbers defining the range (e.g., 2 and 10).

Unless otherwise indicated, ratios, percentages, parts, and the like are by weight.

Ethyleneoxy refers to -CH₂-CH₂-O-, propyleneoxy refers to -CH₂-CH(CH₃)-O- or -CH(CH₃)-CH₂-O-, and butyleneoxy refers to -CH₂-CH(CH₂CH₃)-O- or -CH(CH₂CH₃)-CH₂-O-.

As noted above, the invention provides a surfactant blend comprising an alkoxylate of formula I and an alkoxylate of formula II. The alkoxylate of formula I may be represented by the following formula:

R¹O-(AO)ₓ-(EO)_{y}-H (I)

wherein AO is propyleneoxy or butyleneoxy; EO is ethyleneoxy; R¹ is linear or branched C₆-C₁₀ alkyl; x is a real number from 4 to 6; and y is a real number from 1 to 11.

In some embodiments, R¹ in formula I is linear or branched C₈-C₁₀ alkyl. In some embodiments, R¹ is 2-ethylhexyl (CH₃CH₂CH₂CH₂CH(CH₂CH₃)CH₂-). In some embodiments, R¹ is 2-propylheptyl (CH₃CH₂CH₂CH₂CH₂CH(CH₂CH₂CH₃)CH₂-).

In some embodiments, AO in formula I is propyleneoxy. In some embodiments, AO is butyleneoxy.

In some embodiments, y in formula I is from 3 to 11.

The alkoxylate of formula II of the composition of the invention may be represented by the following formula:

R²O-(EO)ᵣ-(PO)ₚ-(EO)_{q}-H (II)

wherein EO is ethyleneoxy; PO is propyleneoxy; R² is H, or linear or branched C₂-C₄ alkyl; r is a real number from 1 to 30; p is a real number from 1 to 40; and q is a real number from 10 to 50.

In some embodiments, R² in formula II is linear or branched C₂-C₄ alkyl. In some embodiments, R² is n-butyl.

In some embodiments, R² in formula II is H.

In some embodiments, r in formula II is from 1 to 20, alternatively from 1 to 10, alternatively from 1 to 5, or alternatively from 2 to 4.

In some embodiments, p is from 20 to 40, or alternatively from 35 to 40.

In some embodiments, q is from 20 to 45.

In some embodiments, r plus q is from 60 to 80, or alternatively 70 to 80.

In some embodiments, R² in formula II is n-butyl, r is from 2 to 4, p is from 35 to 40, and q is from 20 to 45.

In some embodiments, the alkoxylate of formula II contains at least 30 % by weight, alternatively at least 40 % by weight, of ethyleneoxy based on the total molecular weight of the alkoxylate.

In some embodiments, r, p, and q are such that the alkoxylate of formula II has a number average molecular weight of from 2000 to 20000, alternatively from 3000 to 10000.

It should be noted that the variables x, y, r, p, and q in the formulae I and II compounds describe the average molar amount of charged alkylene oxide relative to one mole of the alcohol starter used in making the compound.

In some embodiments, the alkoxylate of formula I and the alkoxylate of formula II are present in the surfactant blend at a weight ratio of from 99:1 to 1:99, alternatively from 9:1 to 1:9, alternatively from 4:1 to 1:4, or alternatively from 3:1 to 1:3. In some embodiments, the weight ratio is from 3:1 to 1:9. In some embodiments, the weight ratio is from 1:1 to 1:2, alternatively it is 1:1.25, or alternatively it is 1:1.

The surfactant blends are useful as adjuvants for agricultural compositions. Agricultural compositions according to the invention typically comprise, in addition to the surfactant blend, an agricultural active ingredient and water. The agricultural active ingredient may be a herbicide, an insecticide, a fungicide, or combinations of two or more thereof. Each of these material may also be referred to herein generically as a pesticide.

The active ingredient may be present in the composition as a dispersed solid having limited solubility in the water, or it may be completely soluble or partially soluble in the water. Any agricultural active ingredient that is known to be suitable for making water-based pesticide formulations can be used within the composition of the invention. Examples include, without limitation, thiram, chlorothalonil, azoxystrobin, dimethomorph, pencycuron, fipronil, imidacloprid, carbendazim, emamectin, benzoate, and attazine.

In some embodiments of the invention, the agricultural composition may be in the form of a suspension concentrates (SC), emulsifiable concentrates (EC), oil-in-water emulsions (EW), micro-emulsions (ME), aqueous solution (AS), and soluble concentrate (SL), or a water dispersed granule. In some embodiments, it is in the form of a suspension concentrate (SC), an oil-in-water emulsion (EW), a micro-emulsion, or a water dispersed granule. Preferably, the agricultural composition is a SC, such as an aqueous suspension of finely divided insoluble solid particles of the agricultural active ingredient, or it is an oil-in-water emulsion of the agricultural active ingredient.

Additional additives commonly found in agricultural formulations may be included, such as but not limited to one or more a wetting agent, a dispersing agent, an emulsifier, a thickener, a defoamer, and a pH adjuster.

A person of ordinary skill in the art can readily determine the effective amount of the surfactant blend that should be used in an agricultural composition, via a combination of general knowledge of the applicable field as well as routine experimentation where needed. By way of non-limiting example, suitable amounts include from 0.5 to 50 percent, preferably 0.5 to 10 percent, by weight based on the total weight of the agricultural composition. Similarly, the effective amount of an agricultural formulation that should be applied for the control of insects, plant diseases, or weeds can be readily determined, for instance from the use levels recommended by the manufacturer.

Alkoxylates of formula I and formula II as described above may be purchased from commercial vendors or they may be prepared by those skilled in the art using literature techniques (see for instance United States Patent publication number 2011/0098492). In a typical procedure, a suitable alcohol or fatty acid alcohol is alkoxylated with alkylene oxide compounds (e.g., ethylene oxide, propylene oxide, and/or butylene oxide). Alkoxylation processes may, for instance, be carried out in the presence of acidic or alkaline catalysts, or by using metal cyanide catalysts. Alkaline catalysts may include, for instance, hydroxides or alcoholates of sodium or potassium, including NaOH, KOH, sodium methoxide, potassium methoxide, sodium ethoxide and potassium ethoxide. Base catalysts are normally used in a concentration of from 0.05 percent to about 5 percent by weight, preferably about 0.1 percent to about 1 percent by weight based on starting material.

The addition of alkylene oxides may, for instance, be carried out in an autoclave under pressures from about 10 psig to about 200 psig, preferably from about 60 to about 100 psig. The temperature of alkoxylation may range from about 30 °C to about 200 °C, preferably from about 100 °C to about 160 °C. After completion of oxide feeds, the product is typically allowed to react until the residual oxide is less than about 10 ppm. After cooling the reactor to an appropriate temperature ranging from about 20 °C to 130 °C, the residual catalyst may be left unneutralized, or neutralized with organic acids, such as acetic, propionic, or citric acid. Alternatively, the product may be neutralized with inorganic acids, such as phosphoric acid or carbon dioxide. Residual catalyst may also be removed using ion exchange or an adsorption media, such as diatomaceous earth.

Some embodiments of the invention will now be described in detail in the following Examples.

### EXAMPLES

### Evaluation Methods.

Flow point method. An important performance metric for surfactants is wetting performance. To evaluate wetting performance, a method named flow point method is used widely by agrochemical practitioners. The process for the method is: 1) prepare a certain amount of agricultural active ingredient, such as 2g, 5g; 2) prepare 5% surfactant aqueous solution; 3) add surfactant solution to active ingredient drop by drop; meanwhile stir and mill active ingredient with a glass rod; 4) If the wetting performance is good, the active ingredient will drop from the glass rod freely like a liquid. The amount of surfactant solution that can make the active ingredient flow like a liquid is defined as the flow point for this kind of surfactant. If the surfactant cannot effectively wet the active ingredient, a flow point will not emerge.

Pesticide formulation evaluation method. A surfactant composition is used to prepare a pesticide suspension concentrate formulation. The performance of the pesticide formulation is tested as follows.
1) Pesticide formulation stability is tested according to standard methods CIPAC MT39.3, MT 46.3. The pesticide sample is stored at 54 °C for 2 weeks and 0 °C for one week. After storage, the formulation is observed for obvious appearance change and/or active ingredient decomposition.
2) Persistent foaming volume is evaluated according to CIPAC MT 47. This test evaluates the foaming properties of a pesticide sample. To test the value, a graduated cylinder glass stoppered with 250 mL capacity is used. The distance between the 0 mark and the 250 mL mark is 20-21.5 cm, and between the 250 mL mark and the bottom of the stopper is about 4 to 6 cm. Put about 180 mL of standard water and 1 g sample into the 250 mL measuring cylinder standing on a top pan balance. Top up with standard water until the distance between the surface and the bottom of the ground glass joint is 9.0±0.1 cm. Stopper the cylinder and invert 30 times. Place the stoppered cylinder upright on the bench and immediately start the stopwatch. Read the volume of foam produced and remaining after 1 min.
3) Suspensibility is evaluated according to CIPAC MT161, MT 184. The suspensibility is to evaluate suspension ability of pesticide formulation sample after dilution in water. To test the value, pesticide formulation sample of 0.5±0.0002 g is added to 100 mL standard water (containing about 342 ppm of Ca2+ and Mg2+) in a 250 mL graduated cylinder at 30±2°C. Top up with standard water (342 ppm) to the 250 mL mark. Invert the cylinder 30 timer within 1 min. Put the cylinder at 30±2°C water base for 30 min. Remove top 9/10 suspension. After evaporation of water of the remaining 1/10 suspension, weigh the residual and calculate suspensibility.
4) pH value is tested according CIPAC MT 75.3. To test pH value, 1 g of pesticide formulation sample is diluted with 100 mL DI water.

### Materials.

The following materials are used in the examples below.
Alkoxylate 1: 2-ethylhexyl-O-(CH₂CH(CH₃)-O)_{5.5}-(CH₂CH₂O)₆-H.
Alkoxylate 2: butyl-O-(EO)_{3.2}-(PO)_{37.5}-(EO)_{33.6}-H.
TERSPERSE™ 4896: is an wetting and dispersing adjuvant from Huntsman. AEO-5 is primary C10-16 alcohol ethoxylate containing 5 EO units.

Formulations in Table 1 are prepared.

**Table 1**

| Ingredient | Example 1 comparative | Example 2 Inventive | Example 3 Inventive | Example 4 Inventive | Example 5 Inventive | Example 6 Inventive | Example 7 comparative |
|---|---|---|---|---|---|---|---|
| Alkoxylate 1 | 0 | 20% | 40% | 50% | 62.5% | 75% | 100% |
| Alkoxylate 2 | 100% | 80% | 60% | 50% | 37.5% | 25% | 0 |

The wetting performance of various examples from Table 1 as well as the comparative material TERSPERSE™ 4896 are shown in Table 2. The agricultural active ingredient is tebuconazole. One gram of the active is used in each test.

**Table 2**

| | Example 1 comparative | Example 2 Inventive | Example 4 Inventive | Example 6 Inventive | Example 7 comparative | Tersperse 4896 comparative |
|---|---|---|---|---|---|---|
| Flow point (g) | 0.554 | 0.533 | 0.532 | 0.551 | 0.588 | 0.581 |

Summary: The lower flow point, the better wetting performance of an adjuvant. The results in Table 2 show better wetting performance of the alkoxylate 1/alkoxylate 2 blend compared with alkoxylate 1 or alkoxylate 2 alone, or compared to TERSPERSE™ 4896. In addition, when the two components are mixed together, the mixture shows a synergistic effect based on the performance of the individuals, example 1 and 7. The synergistic effect is in a wide mixing ratio range, about 1:9 to 3:1.

Additional flow point test results for various active ingredients are shown in Table 3.

**Table 3.**

| Active Ingredient | Inventive example 4 | Inventive example 5 | comparative example 7 | Comparative AEO-5 | Comparative Tersperse 4896 |
|---|---|---|---|---|---|
| Thiram | 1.700 | Now flow point | No flow point | No flow point | 1.524 |
| Chlorothalonil | 0.557 | 0.554 | 0.614 | 0.711 | 0.540 |
| Azoxystrobin | 1.110 | 1.356 | No flow point | No flow point | 1.070 |
| Dimethomorph | 1.289 | 1.201 | No flow point | No flow point | 1.158 |
| Pencycuron | 0.815 | 0.883 | 0.893 | 1.152 | 0.810 |
| Fipronil | 0.477 | 0.508 | 0.541 | 0.586 | 0.504 |
| Imidacloprid | 1.615 | 1.900 | No flow point | No flow point | 2.060 |
| Carbendazim | 1.670 | 1.740 | 1.687 | 2.030 | 1.948 |
| Emamectin Benzoate | 1.375 | 1.586 | 1.792 | 1.817 | 1.41 8 |
| Attazine | 1.114 | 1.093 | 1.101 | 1.162 | 1.092 |

The data in Table 3 indicates that the alkoxylate 1/alkoxylate 2 blend has better wetting performance than the alkoxylates individually, is comparable to TERSPERSE™ 4896, and better compatibility to different actives.

Pesticide formulation evaluation. Preferred criteria for a generic suspension concentrate (SC) formulation that are widely accepted in the industry are show in Table 4.

**Table 4: Criteria of qualified SC formulations**

| Items | Criteria |
|---|---|
| Active Content (%) | ±0.5 |
| pH value | 4.0∼9.0 |
| Viscosity(mPas) | <1000 |
| Suspensibility(%) | ≥90 |
| Persistent foam volume(mL) | ≤20 |
| Particle size(µm) | 0.5∼5 |

Table 5 shows a pesticide formulation recipe for a 35% tebuconazole SC formulation.

**Table 5**

| | |
|---|---|
| A.I.(97%) | 36% |
| Wetting agent | 1% |
| Dispersing agent | 4% |
| Defoamer | 0.5% |
| 2%Xanthan gum | 7.5% |
| Ethylene glycol | 5.0% |
| Water | 47% |

Table 6 shows performance of the formulation of Table 5, using inventive example 5 as the wetting agent.

**Table 6**

| Adjuvant | Wetting agent | 1% Inventive Example 5 | | |
|---|---|---|---|---|
| | Dispersing agent | 4% Dowfax™ 2A1¹ | | |
| | | Room temperature | Storage at 0°C for 7 days | Storage at 54°C for 2 weeks |
| Yield rate (%)² | | 78.33 | | |
| Active content (%) | | 35.05 | 35.03 | 35.02 |
| Appearance | | NA | No water extraction, no deposit | No water extraction, no deposit |
| pH | | 8.87 | 8.77 | 7.06 |
| Viscosity (mPas) | | 171 | 152 | 200 |
| Suspensibility rate | | 97.22 | 94.44 | 96.71 |
| Persistent foam volume | | 0 | 0 | 0 |
| Particle size (mode) | | 2.08 | 1.88 | 3.17 |
| Evaluation results | Active content | qualified | qualified | qualified |
| | pH | qualified | qualified | qualified |
| | Viscosity | qualified | qualified | qualified |
| | Suspensibility | qualified | qualified | qualified |
| | Particle size | qualified | qualified | qualified |

| | | | | |
|---|---|---|---|---|
| ¹ Alkyldiphenyloxide disulfonate surfactant available from The Dow Chemical Company. ² yield rate is determined from the ratio of the amount of materials in the final sample (following processing of the initial sample, such as grinding, filtering, to reach the final sample) versus all raw materials added to the initial sample. The higher the yield rate, the better grinding performance and flowability. | | | | |

According to the SC formulation criteria shown in Table 4, the 35% tebuconazole SC formulations prepared from inventive example 5 has good quality.

Table 7 shows performance of the formulation of Table 5, using comparative example 7 as the wetting agent.

**Table 7**

| | | | | |
|---|---|---|---|---|
| Adjuvant | Wetting agent | 1% Comparative Example 7 | | |
| | Dispersing agent | 4% Dowfax 2A1 | | |

| | | Room temperature | Storage at 0°C for 7 days | Storage at 54°C for 2 weeks |
|---|---|---|---|---|
| Yield rate (%) | | 75.59 | | |
| Active content (%) | | 35.03 | 35.03 | 35.01 |
| Appearance | | NA | No water extraction, no deposit | No water extraction, no deposit |
| pH | | 8.74 | 8.60 | 7.18 |
| Viscosity (mPas) | | 170 | 169 | 204 |
| Suspensibility rate | | 93.96 | 85.90 | 51.83 |
| Persistent foam volume | | | 0 | 0 |
| Particle size (mode, µm) | | 2.38 | 2.34 | 3.10 |
| Evaluation results | Active content | qualified | qualified | qualified |
| | pH | qualified | qualified | qualified |
| | Viscosity | qualified | qualified | qualified |
| | Suspensibility rate | qualified | Not qualified | Not qualified |
| | Particle size | qualified | qualified | qualified |

According to the SC formulation criteria shown in Table 4, suspensibility rate should be higher than 90%. Thus comparative example 7's suspensibility rate of 85.90% and 51.83% after storage at 0°C and 54°C does not meet the criteria.

## Claims

1. A surfactant blend comprising:
(a) an alkoxylate of formula I:
R¹O-(AO)ₓ-(EO)_{y}-H (I)
wherein AO is propyleneoxy or butyleneoxy; EO is ethyleneoxy; R¹ is linear or branched C₆-C₁₀ alkyl; x is a real number from 4 to 6; and y is a real number from 1 to 11; and
(b) an alkoxylate of formula II:
R²O-(EO)ᵣ-(PO)ₚ-(EO)_{q}-H (II)
wherein EO is ethyleneoxy; PO is propyleneoxy; R² is H, or linear or branched C₂-C₄ alkyl; r is a real number from 1 to 30; p is a real number from 10 to 40; and q is a real number from 10 to 50.

2. The surfactant blend of claim 1, wherein R¹ is 2-ethylhexyl or 2-propylheptyl.

3. The surfactant blend of claim 1 or claim 2, wherein the weight ratio of the alkoxylate of formula I to the alkoxylate of formula II is from 9:1 to 1:9.

4. An agricultural composition comprising:
the surfactant blend of any one of claims 1-3 as an adjuvant;
an agricultural active ingredient; and
water.

5. The agricultural composition of claim 4 wherein the agricultural active ingredient is a herbicide, an insecticide, a fungicide, or a mixture of two or more thereof.

6. The agricultural composition of claim 4 or claim 5 that is a suspension concentrate, an oil-in-water emulsion, a micro-emulsion, or a water dispersed granule.

7. The agricultural composition of any one of claims 4-6 further comprising one or more of a wetting agent, a dispersing agent, an emulsifier, a thickener, a defoamer, and a pH adjuster.

8. A method of controlling insects, plant diseases or weeds, the method comprising:
providing a formulation including an agricultural composition of any one of claims 4-7, and
applying the formulation to at least one of the following: a plant, plant foliage, blossoms, stems, fruits, the area adjacent to the plant, soil, seeds, germinating seeds, roots, liquid and solid growth media, and hydroponic growth solutions.

## Patentansprüche

1. Ein Tensidgemisch, beinhaltend:
(a) ein Alkoxylat der Formel I:
R¹O-(AO)ₓ-(EO)_{y}-H (I)
wobei AO Propylenoxy oder Butylenoxy ist; EO Ethylenoxy ist; R¹ lineares oder verzweigtes C₆-C₁₀-Alkyl ist; x eine reelle Zahl von 4 bis 6 ist; und y eine reelle Zahl von 1 bis 11 ist; und
(b) ein Alkoxylat der Formel II:
R²O-(EO)ᵣ-(PO)ₚ-(EO)_{q}-H (II)
wobei EO Ethylenoxy ist; PO Propylenoxy ist; R² H oder lineares oder verzweigtes C₂-C₄-Alkyl ist; r eine reelle Zahl von 1 bis 30 ist; p eine reelle Zahl von 10 bis 40 ist; und q eine reelle Zahl von 10 bis 50 ist.

2. Tensidgemisch gemäß Anspruch 1, wobei R¹ 2-Ethylhexyl oder 2-Propylhexyl ist.

3. Tensidgemisch gemäß Anspruch 1 oder Anspruch 2, wobei das Gewichtsverhältnis des Alkoxylats der Formel I zu dem Alkoxylat der Formel II von 9 : 1 bis 1 : 9 beträgt.

4. Eine Agrarzusammensetzung, beinhaltend:
das Tensidgemisch gemäß einem der Ansprüche 1-3 als Hilfsstoff;
einen Agrarwirkstoff; und
Wasser.

5. Agrarzusammensetzung gemäß Anspruch 4, wobei der Agrarwirkstoff ein Herbizid, ein Insektizid, ein Fungizid oder eine Mischung von zwei oder mehr davon ist.

6. Agrarzusammensetzung gemäß Anspruch 4 oder Anspruch 5, die ein Suspensionskonzentrat, eine Öl-in-Wasser-Emulsion, eine Mikroemulsion oder ein wasserdispergiertes Granulat ist.

7. Agrarzusammensetzung gemäß einem der Ansprüche 4-6, ferner beinhaltend eines oder mehrere von einem Benetzungsmittel, einem Dispergiermittel, einem Emulgator, einem Verdickungsmittel, einem Entschäumer und einem Mittel zur Einstellung des pH-Werts.

8. Ein Verfahren zur Bekämpfung von Insekten, Pflanzenkrankheiten oder Unkräutern, wobei das Verfahren Folgendes beinhaltet:
Bereitstellen einer Formulierung, die eine Agrarzusammensetzung gemäß einem der Ansprüche 4-7 umfasst, und
Anwenden der Formulierung auf mindestens eines der Folgenden: eine Pflanze, pflanzliche Blätter, Blüten, Stämme, Früchte, die Fläche neben der Pflanze, Boden, Samen, keimende Samen, Wurzeln, flüssige und feste Wachstumsmedien und hydroponische Wachstumslösungen.

## Revendications

1. Un mélange homogène de tensioactifs comprenant :
(a) un alcoxylate de formule I :
R¹O-(AO)ₓ-(EO)_{y}-H (I)
où AO est un propylèneoxy ou un butylèneoxy ; EO est un éthylèneoxy ; R¹ est un alkyle en C₆ à C₁₀ linéaire ou ramifié ; x est un nombre réel allant de 4 à 6 ; et y est un nombre réel allant de 1 à 11 ; et
(b) un alcoxylate de formule II :
R²O-(EO)ᵣ-(PO)ₚ-(EO)_{q}-H (II)
où EO est un éthylèneoxy ; PO est un propylèneoxy ; R² est H, ou un alkyle en C₂ à C₄ linéaire ou ramifié ; r est un nombre réel allant de 1 à 30 ; p est un nombre réel allant de 10 à 40 ; et q est un nombre réel allant de 10 à 50.

2. Le mélange homogène de tensioactifs de la revendication 1, où R¹ est un 2-éthylhexyle ou un 2-propylheptyle.

3. Le mélange homogène de tensioactifs de la revendication 1 ou de la revendication 2, où le rapport en poids de l'alcoxylate de formule I à l'alcoxylate de formule Il va de 9/1 à 1/9.

4. Une composition agricole comprenant :
le mélange homogène de tensioactifs de n'importe laquelle des revendications 1 à 3 en tant qu'adjuvant ;
un principe actif agricole ; et
de l'eau.

5. La composition agricole de la revendication 4 où le principe actif agricole est un herbicide, un insecticide, un fongicide, ou un mélange de deux de ceux-ci ou plus.

6. La composition agricole de la revendication 4 ou de la revendication 5 qui est un concentré fluidifiable, une émulsion huile dans eau, une micro-émulsion, ou un granulé dispersé dans de l'eau.

7. La composition agricole de n'importe laquelle des revendications 4 à 6 comprenant en sus un ou plusieurs éléments parmi un agent mouillant, un agent dispersant, un émulsifiant, un épaississant, un antimousse, et un ajusteur de pH.

8. Une méthode de lutte contre des insectes, des maladies végétales ou des mauvaises herbes, la méthode comprenant :
le fait de fournir une formulation incluant une composition agricole de n'importe laquelle des revendications 4 à 7, et
le fait d'appliquer la formulation sur au moins un des éléments suivants : une plante, un feuillage d'une plante, des fleurs, des tiges, des fruits, la zone adjacente à la plante, un sol, des graines, des graines en germination, des racines, des milieux de culture liquides et solides, et des solutions nutritives hydroponiques.
